# EUROPÄISCHE PATENTSCHRIFT

(11) **EP 0 750 121 B1**
(45) Veröffentlichungstag und Bekanntmachung des Hinweises auf die Patenterteilung: **09.09.1998**
(21) Anmeldenummer: 96107646.0
(22) Anmeldetag: 14.05.1996
(51) Int. Cl.: F16B 5/02, E04F 13/08

(54) **Befestigungseinrichtung für ein Montageteil mit Halteelement und Befestigungselement sowie mit Einrichtung zum Toleranzausgleich**
Mounting device for a mounting element with a retaining element and a fastening element as well as a tolerance-compensating device
Dispositif de fixation pour un élément de montage avec un élément de retenue et un élément de fixation ainsi qu'un dispositif compensateur de tolérance

(30) Priorität: 22.06.1995 DE 19522730
(43) Veröffentlichungstag der Anmeldung: 27.12.1996
(73) Patentinhaber: Linke-Hofmann-Busch Gesellschaft mit beschränkter Haftung, D-38233 Salzgitter (DE)
(72) Erfinder: Bernd, Uthe, Dipl.-Ing., 39397 Schwanebeck (DE)

(56) Entgegenhaltungen:
- FR-A- 2 585 782
- GB-A- 2 234 540
- US-A- 4 035 093

## Beschreibung

Die Erfindung betrifft eine Befestigungseinrichtung für ein Montageteil mit Halteelement und Befestigungselement sowie mit Einrichtung zum Toleranzausgleich für ein an einer Tragstruktur zu befestigendes Montageteil (GB-A-2 234 540) .

Aus dem allgemeinen Stand der Technik sind Befestigungseinrichtungen der vorgenannten Art bekannt, bei denen z. B. durch eine Bolzen-Langloch-Anordnung sich ein Montageteil in die gewünschte Position drehen oder schieben läßt, derart, daß dieses Bauteil innerhalb der geforderten Toleranzen angeordnet ist.

Weiter sind Befestigungseinrichtungen bekannt, bei den durch Drehen von exzentrischen Bolzen oder Scheiben ein Höhen- oder Seitenausgleich für eine Anlagefläche geschaffen wird ( FR-A- 2 585 782) .

Die eingangs genannten Befestigungeinrichtungen weisen den Nachteil auf, daß bei größeren Krafteinleitungen keine sichere Befestigung mehr gegeben sein kann, weil nur eine kraftschlüssige Befestigung erzeugt wurde.

Bei Befestigungseinrichtungen mit exzentrischen Bolzen oder Scheiben kommt als Anlagefläche parallel zur Bolzenachse in der Regel nur eine kleine Anlagefläche zur Abstützung der Kräfte in Betracht, so daß einerseits die Kräfte am Exzenterelement sehr hoch sind und andererseits das zu befestigende Bauteil an der kleinen Abstützfläche (praktisch Linienberührung) hoch belastet wird.

Der Erfindung liegt die Aufgabe zugrunde, eine Befestigungseinrichtung der eingangs genannten Art zu schaffen, die eine belastbare Abstützung eines Montageteils an einer Tragstruktur ermöglicht und bei der gegebene Toleranzen bezüglich der Position eines Halteelementes an der Tragstruktur für das Montageteil in einem vorgebbaren Rahmen im Sinne einer Verringerung der Toleranzen für die Position des Montageteils bei der Montage veränderbar sind.

Diese Aufgabe wird durch die im Anspruch 1 angegebenen Merkrnale der Befestigungseinrichtung gelöst.

Weitere Ausgestaltungen der Erfindung sind in den Unteransprüchen angegeben.

Ein Ausführungsbeispiel der Erfindung ist nachstehend unter Bezugnahme auf die Zeichnung näher erläutert.

Es zeigt:

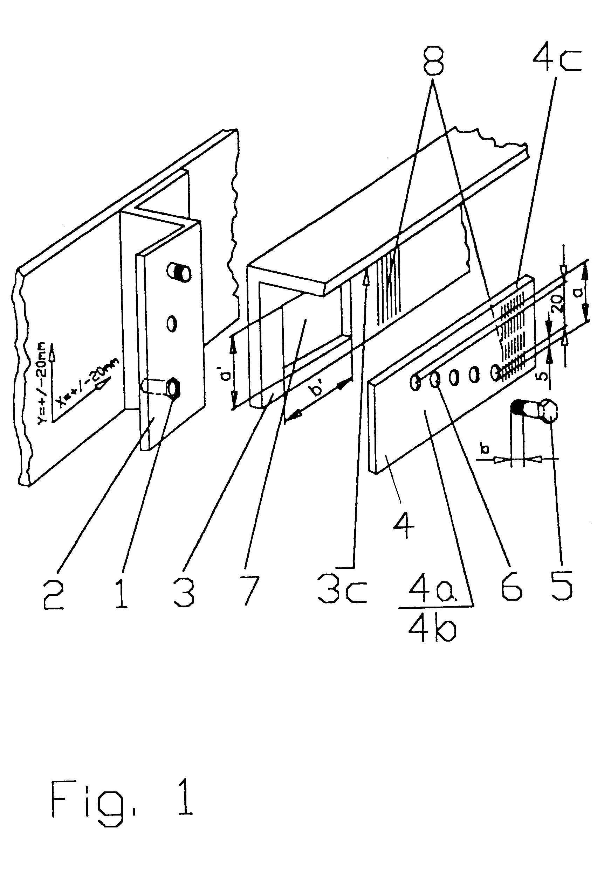

- Fig. 1: eine Befestigungseinrichtung mit Einrichtung zum Toleranzausgleich in perspektivischer Darstellung.

Die Befestigungseinrichtung weist ein Halteelement 1 einer Tragstruktur 2, insbesondere einer Rohbaustruktur, ein Montageteil 3, einen Gleitstein 4 und ein Befestigungselement 5 auf, welches mit dem Halteelement 1 die Befestigung des Montageteils 3 an der Tragstruktur 2 bewirkt.

Das Halteelement ist z. B. als Bohrung, Gewindebolzen, Einsatzmutter oder dergleichen ausgebildet.

Dem Halteelement 1 ist bei Ausbildung als Bohrung ein Befestigungselement 5 in Ausbildung einer Schrauben-Mutter-Verbindung zugeordnet.

Bei Ausbildung des Halteelementes 1 als Gewindebolzen ist dem Halteelement 1 ein Befestigungselement 5 in Ausbildung einer Mutter zugeordnet.

Bei Ausbildung des Halteelementes 1 als Einsatzmutter ist dem Halteelement 1 ein Befestigungselement in Ausbildung einer Schraube zugeordnet.

Halteelement 1 und Befestigungselement 5 bilden vorzugsweise eine lösbare Befestigung.

Der Gleitstein 4 weist neben Anlageflächen 4a, 4b, die quer zur Achse des Befestigungselements 5 angeordnet sind, mindestens eine ebene Abstützfläche 4c auf, die parallel zur Achse des Befestigungselements 5 angeordnet ist und die an einer Abstützfläche 3c des Montageteils 3 zur Anlage kommt, wodurch eine formschlüssige Abstützung des Montageteils 3 quer zur Achse des Befestigungselements 5 am Gleitstein 4 herstellbar ist.

Weiter weist der Gleitstein 4 Rasterbohrungen 6 auf, die in einem vorgegebenen Raster auf dem Gleitstein 4 angeordnet sind. Die Anzahl und die Abstände der Rasterbohrungen 6 in Richtung des Verstellbereiches a des Lochrasters bestimmen die einstellbaren Montagetoleranzen d. h. die Stufung der einstellbaren Positionierung des Montageteiles 3 am Halteelement 1 der Tragstruktur 2 in Richtung des des Verstellbereiches a des Lochrasters um eine Toleranzverringerung zu erzielen, sind die Abstände der Rasterbohrungen 6 voneinander kleiner als das Maß der Toleranzen der Position des Halteelementes 1 an der Tragstruktur 2 ausgeführt, z.B. 5 Millimeter (mm) Abstand gegenüber einer Grundtoleranz von +/- 20 mm des Halteelements 1 in senkrechter und waagerechter Richtung mit senkrechter Grundtoleranz Y und waagerechter Grundtoleranz X.

Das Montageteil 3 weist einen Durchbruch 7 auf, dessen Erstreckung a' im Verstellbereich a des Lochrasters, im Ausführungsbeispiel in senkrechter Richtung, mindestens dem Abstand zwischen zwei Rasterbohrungen 6 plus dem Durchmesser b des ihn durchragenden Halteelementes 1 bzw. Befestigungselementes 5 entspricht. Um im Rahmen der vorgegebenen Grundtoleranzen X, Y einen immer ausreichend großen Verstellbereich zu erhalten, ist es notwendig, daß der Durchbruch 7 in senkrechter Erstreckung a' mindestens so groß wie das Maß der senkrechten Grundtoleranz Y des Halteelementes 1 plus dem Durchmesser b des Befestigungselementes 5 und in waagerechter Erstreckung b' mindestens so groß wie das Maß der waagerechten Grundtoleranz X des Halteelementes 5 plus dem Durchmesser b des Befestigungselementes 5 ausgebildet ist.

An den einander gegenüberliegenden Flächen weist das Montageteil 3 unter der Gleitstein 4 mindestens bereichsweise ein Riffelraster 8 mit senkrechten Riffellinien auf, womit ein Formschluß gegenüber horizontal angreifenden Kräften gegeben ist.

Im Ausführungsbeispiel ist der Gleitstein 4 als rechteckige Platte mit diagonal angeordnetem Lochraster ausgebildet. Die Rasterbohrungen 6 sind jeweils im Abstand von 5 Millimetem (mm) in vertikaler Richtung versetzt angeordnet. Die Anlageflächen 4c sind von der nächst gelegenen Rasterbohrung 6 ebenfalls im Abstand von 5 mm angeordnet.

An der Tragstruktur 2 ist das Halteelement 1 als Einsatzmutter ausgebildet und mit einer Grundtoleranz von Y = +/- 20 mm zur senkrechten und X = +/- 20 mm zur horizontalen Sollposition angeordnet.

Das Montageteil 3 ist nach Ausrichtung in die Sollposition mittels des Gleitsteines 4 und des Befestigungselementes 5 an der Tragstruktur 2 zu befestigen, wobei nach Anlage des Montageteils 3 an die ebene Abstützfläche 4c des Gleitsteines 4 die Rasterbohrung 6 zur Befestigung gewählt wird, die bei der geringsten Verschiebung des Montageteils 3 gegenüber seiner Sollposition dem Befestigungselement 5 (Schraube) ein Durchragen durch den Gleitstein 4, den Durchbruch 7 und des Montageteils 3 und ein einwandfreies Einschrauben in das Halteelement 1 (Einsatzmutter) an der Tragstruktur 2 ermöglicht.

Die Sollposition des Montageteils 3 in horizontaler Richtung ist durch Verschieben desselben innerhalb der horizontalen Erstreckung seines Durchbruches 7 in durch das Riffelraster 8 vorgegebenen, diskreten Schritten einstellbar. Durch das Riffelraster 8 ist zwischen dem Montageteil 3 und dem Gleitstein 4 gegenüber horizontal angreifenden Kräften ebenfalls eine formschlüssige Befestigung herstellbar.

Die Einstellbarkeit der Sollposition des Montageteils 3 in vertikaler Ebene ist durch das senkrechte Lochraster mit Anordnung der Rasterbohrungen 6 in 5-mm-Schritten und deshalb mit einer maximalen Toleranz von +/- 5 mm vorgegeben. Die wirtschaftlich herstellbaren, feineren Toleranzen des Lochrasters bzw. seiner Rasterbohrung 6 werden vernachlässigt, da diese für die Reduzierung der Toleranzen von +/- 20 mm auf +/-5 mm bei der Bauteilmontage nur von untergeordneter Bedeutung sind.

## Patentansprüche

1. Befestigungseinrichtung für ein Montageteil (3) mit Halteelement (1) und Befestigungselement (5) sowie mit Einrichtung zum Toleranzausgleich für ein an einer Tragstruktur (2), insbesondere Rohbaustruktur, zu befestigendes Montageteil (3), **dadurch gekennzeichnet,** daß zwischen dem Befestigungselement (5) und dem Montageteil (3) ein Gleitstein (4) angeordnet ist, der den Gleitstein (4) durchdringende Rasterbohrungen (6) aufweist, die in einem vorgegebenen Raster auf dem Gleitstein (4) angeordnet sind, wobei die Abstände in Senkrechter Richtung der Rasterbohrung (6) voneinander kleiner als das Maß der Grundtoleranzen X,Y der Position des Halteelementes (1) der Tragstruktur (2) ausgeführt sind, und der neben Anlageflächen (4a, 4b) quer zum Befestigungselement (5) mindestens eine ebene Abstützfläche (4c) aufweist, die parallel zur Achse des Befestigungselements (5) angeordnet ist und die an einer zugeordneten Abstützfläche (3c) des Montageteils (3) anliegt, wodurch eine formschlüssige Abstützung des Montageteils (3) parallel zur Achse des Befestigungselementes (5) herstellbar ist, und daß das Montageteil (3) einen Durchbruch (7) aufweist, dessen Erstreckung (a') im Verstellbereich (a) des Lochrasters mindestens dem Abstand zwischen zwei Rasterbohrungen (6) plus dem Durchmesser (b) des ihn durchragenden Halteelementes (1) bzw. Befestigungselementes (5) entspricht.

2. Befestigungseinrichtung nach Anspruch 1, **dadurch gekennzeichnet,** das der Durchbruch (7) in senkrechter Erstreckung (a') im Verstellbereich (a) des Lochrasters mindestens so groß wie das Maß der senkrechten Grundtoleranz (Y) des Halteelementes (1) plus dem Durchmessers (b) und in waagerechter Erstreckung (b') mindestens so groß wie das Maß der waagerechten Grundtoleranz X des Halteelementes (1) plus dem Durchmesser b des ihn durchragenden Halteelementes (1) bzw. Befestigungselementes (5) ausgebildet ist.

3. Befestigungseinrichtung nach Anspruch 2, **dadurch gekennzeichnet,** das der Gleitstein (4) plattenförmig, insbesondere rechteckig ausgebildet ist.

4. Befestungseinrichtung nach mindestens einem der Ansprüche 1 - 3, **dadurch gekennzeichnet,** das die Abstützfläche (4c) des Gleitsteins (4) von der ihr nächstgelegenen Rasterbohrung (6) im gleichen Abstand wie die Rasterbohrungen (6) zueinander angeordnet sind.

5. Befestigungseinrichtung nach mindestens einem der vorhergehenden Ansprüche 1 - 4, **dadurch gekennzeichnet,** daß das Montageteil (3) und der Gleitstein (4) an den gegeneinander anliegenden Flächen mindestens bereichsweise ein Riffelraster (8) mit sich senkrecht in Y-Richtung erstreckenden Riffellinie aufweist.

## Claims

1. Fastening device for an assembly part (3) with a holding element (1) and a fastening element (5) and with a device for offsetting the tolerance for an assembly part (3) to be fastened to a supporting structure (2), in particular a body structure, characterised in that between the fastening element (5) and the assembly part (3) there is a sliding block (4) which exhibits grid holes (6) which pass through the sliding block (4) and are disposed in a predetermined grid on the sliding block (4), whereby the spacing between the grid holes (6) in the vertical direction is less than the measurement of the basic tolerances (X, Y) for the position of the holding element (1) of the supporting structure (2), and which in addition to contact surfaces (4a, 4b) transversely to the fastening element (5) exhibits at least one flat supporting surface (4c) which is disposed parallel to the axis of the fastening element (5) and bears against an associated supporting surface (3c) of the assembly part (3), through which frictional support can be produced for the assembly part (3) parallel to the axis of the fastening element (5), and in that the assembly part (3) exhibits an opening (7) whose extension (a') in the adjustment range (a) of the grid of holes at least corresponds to the spacing between two grid holes (6) plus the diameter (b) of the holding element (1) or fastening element (5) projecting through it.

2. Fastening device according to claim 1, characterised in that in the vertical extension (a') in the adjustment range (a) of the grid of holes the opening (7) is at least as great as the measurement of the vertical basic tolerance (Y) of the holding element (1) plus the diameter (b), and in the horizontal extension (b') the opening is at least as great as the measurement of the horizontal basic tolerance (X) of the holding element (1) plus the diameter (b) of the holding element (1) or fastening element (5) projecting through it.

3. Fastening device according to claim 2, characterised in that the sliding block (4) is plate-shaped, in particular rectangular.

4. Fastening device according to at least one of claims 1 to 3, characterised in that the supporting surface (4c) of the sliding block (4) and the grid hole (6) nearest to it are disposed with the same spacing as the grid holes (6).

5. Fastening device according to at least one of the preceding claims 1 to 4, characterised in that on the surfaces bearing on one another at least in areas the assembly part (3) and the sliding block (4) exhibit a ridge pattern (8) with ridge lines extending vertically in the Y direction.

## Revendications

1. Dispositif de fixation pour un élément de montage (3), comportant un élément d'arrêt (1), un élément de fixation (5) et un dispositif de compensation de tolérances pour un élément de montage (3) à fixer à une structure de support (2), en particulier une structure de construction brute, **caractérisé** en ce qu'il est prévu, entre l'élément de fixation (5) et l'élément de montage (3), une pièce coulissante (4) qui est traversée par des perçages (6) disposés sur elle suivant un réseau prédéfini, les écartements entre ces perçages (6) dans le sens vertical étant inférieurs aux tolérances fondamentales X, Y de la position de l'élément d'arrêt (1) de la structure de support (2), et qui comporte, en plus de surfaces d'application (4a, 4b) perpendiculaires à l'élément de fixation (5), au moins une surface d'appui plane (4c) qui est parallèle à l'axe de l'élément de fixation (5) et qui est appliquée contre une surface d'appui associée (3c) de l'élément de montage (3), moyennant quoi un appui par complémentarité de forme de l'élément de montage (3) peut être réalisé parallèlement à l'axe de l'élément de fixation (5), et en ce que l'élément de montage (3) présente une ouverture (7) dont l'extension (a') dans la zone de réglage (a) du réseau de perçages correspond au moins à l'écartement entre deux perçages (6) plus le diamètre (b) de l'élément d'arrêt (1) ou de l'élément de fixation (5) qui traverse ladite ouverture.

2. Dispositif de fixation selon la revendication 1, **caractérisé** en ce que l'extension verticale (a') de l'ouverture (7) dans la zone de réglage (a) du réseau de perçages est au moins aussi grande que la tolérance fondamentale verticale (Y) de l'élément d'arrêt (1) plus le diamètre (b) tandis que son extension horizontale (b') est au moins aussi grande que la tolérance fondamentale horizontale X de l'élément d'arrêt (1) plus le diamètre b de l'élément d'arrêt (1) ou de l'élément de fixation (5) qui traverse ladite ouverture.

3. Dispositif de fixation selon la revendication 2, **caractérisé** en ce que la pièce coulissante (4) a la forme d'une plaque, en particulier une forme rectangulaire.

4. Dispositif de fixation selon l'une au moins des revendications 1 à 3, **caractérisé** en ce que la surface d'appui (4c) de la pièce coulissante (4) est espacée du perçage (6) le plus proche d'une distance égale à l'écartement entre les perçages (6).

5. Dispositif de fixation selon l'une au moins des revendications précédentes 1 à 4, **caractérisé** en ce que l'élément de montage (3) et la pièce coulissante (4) présentent au moins par zones, sur leurs surfaces appliquées l'une contre l'autre, un réseau de rainures (8) présentant une ligne de cannelures qui s'étend à la verticale, dans le sens Y.
